**Europäisches Patentamt**

**European Patent Office**

**Office européen des brevets**

(11) Veröffentlichungsnummer: **0 140 035**
**B1**

# EUROPÄISCHE PATENTSCHRIFT

(51) Int. Cl.⁴: **G 11 B 15/675**

(45) Veröffentlichungstag der Patentschrift:
**27.12.89**

(21) Anmeldenummer: **84110465.6**

(22) Anmeldetag: **03.09.84**

(54) Sicherungsvorrichtung für Bandkassetten zum lagerichtigen Einschub der Bandkassette in eine Aufnahmevorrichtung.

(30) Priorität: **06.09.83 DE 3332157**

(43) Veröffentlichungstag der Anmeldung:
**08.05.85 Patentblatt 85/19**

(45) Bekanntmachung des Hinweises auf die Patenterteilung:
**27.12.89 Patentblatt 89/52**

(84) Benannte Vertragsstaaten:
**DE GB**

(73) Patentinhaber: **TANDBERG DATA A/S, Kjelsasveien 161 Postboks 9 Korsvoll, N-0808 Oslo 8 (NO)**

(72) Erfinder: **Guttorm, Rudi, Edvard- Grieg- Sveien 17, Fjellhamer (NO)**

(74) Vertreter: **Mehl, Ernst, Dipl.- Ing., Postfach 22 13 17, D-8000 München 22 (DE)**

(56) Entgegenhaltungen:
**DE-A-2 739 127**
**DE-A-2 739 172**
**FR-A-2 107 551**
**GB-A-2 009 482**
**US-A-3 766 327**
**US-A-4 261 527**

**PATENTS ABSTRACTS OF JAPAN, Band 8, Nr. 45 (P-257) 1482 , 28. Februar 1984; & JP - A - 58 196 654**
**PATENTS ABSTRACTS OF JAPAN, Band 1, Nr. 58, 6. Juni 1977, Seite 106 E 77; & JP - A - 52 2410**
**PATENTS ABSTRACTS OF JAPAN, Band 5, Nr. 36 (P-51) 708 , 7. März 1981; & JP - A - 55 157 154**

EP 0 140 035 B1

## Beschreibung

Die Erfindung betrifft eine Sicherungsvorrichtung für Bandkassetten gemäß dem Oberbegriff des Patentanspruches 1.

Sicherungsvorrichtungen der eingangs genannten Art sind allgemein bekannt und mit Erfolg zur Anwendung gelangt. So ist es z. B. üblich bei sog. "Floppy Disks", einem flexiblen Magnetspeicher, der in einer Papierhülle angeordnet ist, am Rand der Papierhülle eine Ausnehmung vorzusehen, die über eine elektrische Schalteinrichtung innerhalb des Abspielgerätes abgetastet wird, und die einen lagerichtigen Einschub der Magnetscheibe in das Abspiel- und Aufzeichnungsgerät sicherstellt.

Auch sind Magnetbandkassetten bekannt, deren Kassettengehäuse über erhabene Flächenteile verfügen, die aus den Begrenzungsflächen des Gehäuses hervorstehen. Aus DE-A-2 145 361 ist ein Gerät zur Aufnahme und/oder Wiedergabe von Signalen auf bzw. von einer derartigen Magnetbandkassette bekannt. Dieses Gerät weist ein als Formteil mit Ausnehmungen und Anschlagelementen ausgestaltetes Fixierglied auf, das im Einschubkanal des Gerätes auslenkbar angeordnet ist. Wird die Kassette korrekt eingeführt, verschiebt die Kassettenwand mit den erhabenen Flächenteilen einen Anschlagstift entlang einer Ausnehmung des Fixiergliedes. Wenn der Stift sich dem rückwärtigen Ende der Ausnehmung nähert, kommen Anschlagelemente des Fixiergliedes mit den Erhöhungen der Kassettenwand in Eingriff und bewirken, daß das Fixierglied abgelenkt wird und der Stift freigegeben wird. Das Fixierglied wird nicht nach oben abgelenkt, wenn die Kassette falsch eingelegt wird. In diesem Fall wird der Stift in seiner Bewegung durch das hintere Ende der Ausnehmung blockiert und verhindert so die vollständige Einführung der Kassette. Es ist ersichtlich, daß diese bekannte Lösung aufwendig, damit kostspielig und in dem Zusammenwirken mehrerer Teile außerdem toleranzbehaftet und damit störungsanfällig ist.

Aus DE-A-2 739 172 ist weiterhin eine Vorrichtung zum Verhindern des falschen Einlegens einer Kassette in eine Kassettenaufnahme bekannt, bei der das Kassettengehäuse ebenfalls erhabene Teilflächen aufweist. Diese sind hier als seitliche Ansätze an den Seitenwänden in der Nähe der Vorderkante der Kassette ausgebildet. In den Seitenwänden des Einschubkanales der Kassettenaufnahme ist je ein Anschlaghebel entgegen einer Federkraft ausschwenkbar gelagert. Bei seitenrichtigem Einschieben der Kassette schwenken die seitlichen Ansätze die Anschlaghebel aus dem Einschubbereich der Kassette solange aus, bis diese vollständig eingeschoben ist. Danach schwenken die Anschlaghebel hinter den Ansätzen ein, so daß sie mit Rastklinken die Kassette in der Kassettenaufnahme verriegeln. Wird dagegen die Kassette falsch eingelegt, unterbleibt die Schwenkbewegung des Anschlaghebels, so daß die Vorderkante der Kassette durch die Rastklinken der eingeschwenkten Anschlaghebel blockiert wird, bevor die Kassette vollständig eingeschoben ist. Die bekannte Anordnung ist bezüglich der Längsachse des Einschubkanales symmetrisch ausgebildet, die Kassette kann daher zwar immer nur mit ihrer Vorderkante voraus voll eingeschoben werden, es wird aber nicht unterschieden, mit welcher Grundfläche obenliegend die Kassette eingeschoben wird.

Aus US-A-4 261 527 schließlich ist eine Sicherungsvorrichtung gemäß dem Oberbegriff des Patentanspruches 1 bekannt, bei der eine Magnetbandkassette nur in einer einzigen vorgeschriebenen Orientierung, d. h. Vorderkante voraus und Oberseite obenliegend in eine Kassettenaufnahme einschiebbar ist. Auch hier ist in der Seitenwand des Einschubkanales ein schwenkbares Anschlagstück angeordnet, das bei einer falsch eingelegten Kassette in eine in einer der Kassettenseitenwände angeordnete V-förmige Vertiefung einfällt und das weitere Einschieben blockiert. Wird dagegen die Kassette seitenrichtig eingeschoben, so fällt eine in der gegenüberliegenden Seitenwand des Einschubkanales angeordnete, durch eine Feder vorgespannte Andruckrolle in die V-förmige Vertiefung ein und hält die Kassette in der eingelegten Endposition fest. Diese bekannte Lösung ist zwar betriebssicher, dennoch konstruktiv noch relativ aufwendig.

Aufgabe der Erfindung ist es, eine Sicherungsvorrichtung der eingangs genannten Art einfach und kostengünstig so auszugestalten, daß ein lageverkehrtes Einschieben der Bandkassette in die Aufnahmevorrichtung nicht möglich ist.

Diese Aufgabe wird bei einer Sicherungsvorrichtung der eingangs genannten Art gemäß dem kennzeichnenden Teil des ersten Patentanspruches gelöst.

Weitere vorteilhafte Ausführungsformen der Erfindung sind in den Unteransprüchen gekennzeichnet.

Durch die erfindungsgemäße Anordnung eines zungenförmigen Federelementes in der Aufnahmevorrichtung mit entsprechender Auflaufkante und Anschlagstück, das mit einer Ausnehmung an der Vorderkante der Kassette zusammenarbeitet, wird ein falsches Einschieben der Bandkassette in die Aufnahmevorrichtung auf jeden Fall vermieden. So kann bei seitenverkehrter Lage der Bandkassette die Bandkassette in die Einschubvorrichtung nur bis zum Anschlagstück eingeschoben werden.

Durch die Ausgestaltung des zungenförmigen Federelementes als einstückiges Stanzteil in Verbindung mit der Aussparung an der Vorderkante der Bandkassette wird die gesamte Vorrichtung einfach und störungsunanfällig. Funktionsstörungen durch Verschmutzung u.ä. können nicht auftreten.

Eine Ausführungsform der Erfindung ist in den Zeichnungen dargestellt und wird im folgenden beispielsweise näher beschrieben. Es zeigen

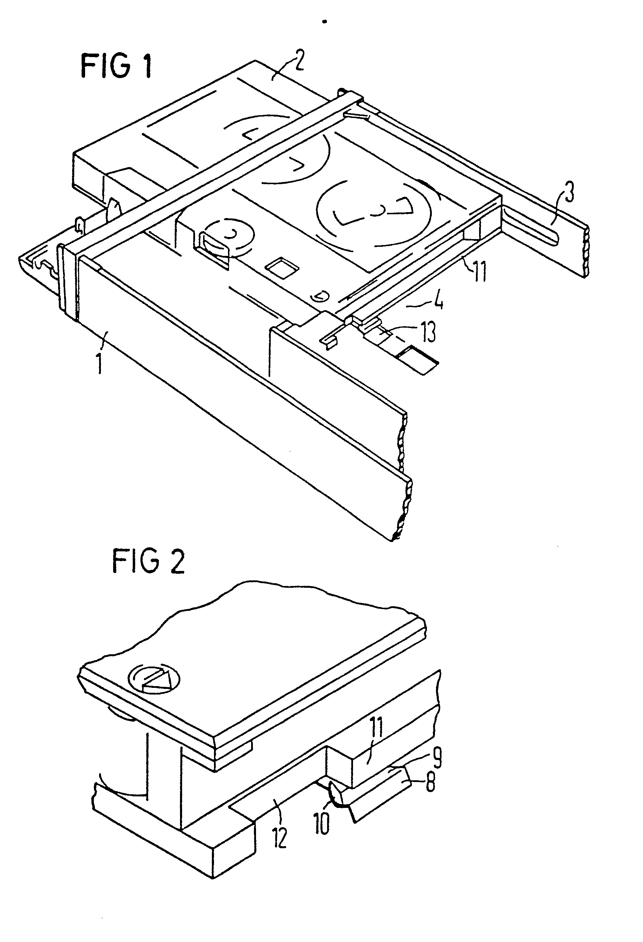

Fig. 1 eine schematische Darstellung der Sicherungsvorrichtung innerhalb der Aufnahmevorrichtung für eine Magnetbandkassette,

Fig. 2 eine vergrößerte Ausschnittsdarstellung der Sicherungsvorrichtung gemäß der Fig. 1,

Fig. 3 schematische Darstellung der Funktion und der Sicherungsvorrichtung bei einem lageverkehrten Einschub der Magnetbandkassette und

Fig. 4

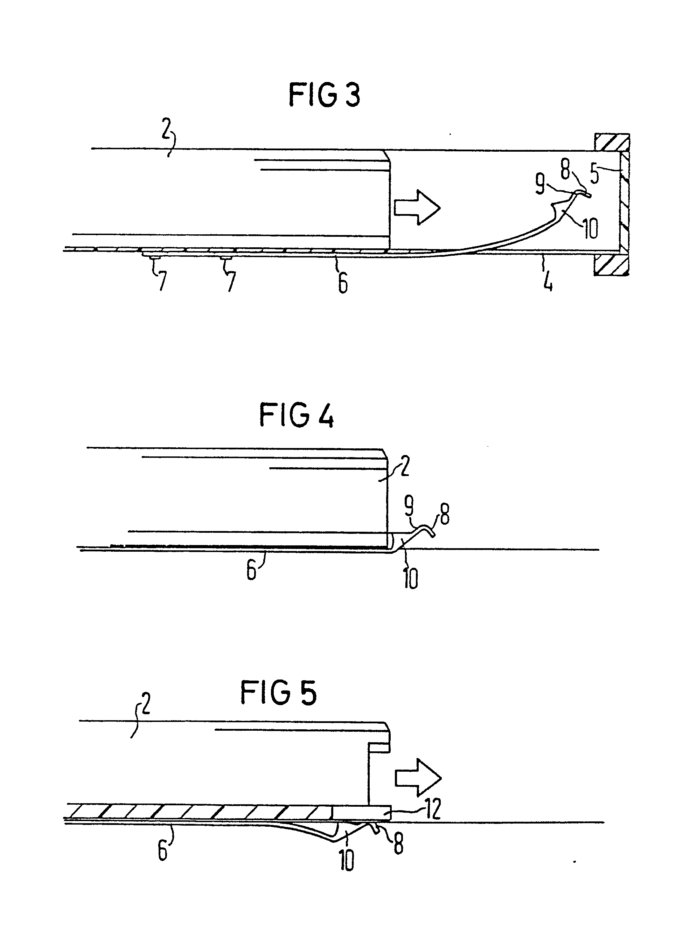

Fig. 5 eine schematische Darstellung der Funktion der Sicherungsvorrichtung beim lagerichtigen Einschub der Magnetbandkassette.

Ein hier nur schematisch dargestelltes Magnetbandkassettengerät 1 weist eine als Einschubkanal für eine Magnetbandkassette 2 ausgebildete Aufnahmevorrichtung 3 auf, in der hier nicht dargestellt, der Magnetkopf samt den zugehörigen Antriebselementen für die Magnetbandkassette 2 angeordnet sind. Im Bodenbereich 4 der Aufnahmevorrichtung ist im Abstand zu einem hinteren Anschlag 5 (Fig. 3) der Aufnahmevorrichtung ein zungenförmiges Federelement 6 über Nieten 7 befestigt. An seinem freien Ende befindet sich eine Auflaufkante 8, die mit einer Auflaufschräge 9 versehen ist. Seitlich neben dieser Auflaufkante und fest mit ihr verbunden ist ein lappenförmiges Anschlagstück 10 ausgebildet, das die Auflaufkante 8 in Richtung des festen Endes des Federelementes 6 hintergreift. Das gesamte zungenförmige Federelement 6 ist dabei einstückig aus einem Stanzteil ausgeformt und arbeitet mit einer an einer Vorderkante 11 der Magnetbandkassette angebrachten Ausnehmung 12 zusammen.

Die Funktion des zungenförmigen Federelementes 6 in Verbindung mit der Ausnehmung 12 wird nun anhand der Fig. 2 bis 5 näher erläutert.

Wird entsprechend der Darstellung der Fig. 3 und 4 die Magnetbandkassette 2 seitenverkehrt in die Aufnahmevorrichtung 3 eingeschoben, dann steht dem zungenförmigen Federelement 6 nur eine Kante ohne Aussparung 12 entgegen. Die Magnetbandkassette 2 läuft deshalb beim Einschub auf das hakenartige Anschlagstück 10 auf (Fig. 4) und kann deswegen nur bis zu dessen Position im Abstand zum Anschlag 5 eingeschoben werden. Die herausstehende Kassette signalisiert die falsche Einschubrichtung.

Bei lagerichtigem Einschieben der Magnetbandkassette 2 entsprechend der Darstellung der Fig. 5 gleitet beim Einschieben das hakenförmige Anschlagstück 10 an der Seitenkante der Ausnehmung 12 vorbei, so daß die Vorderkante 11 (Fig. 2) auf die Auflaufschräge 9 der Auflaufkante 8 auflaufen kann. Bei weiterer Einschubbewegung der Magnetbandkassette 2 wird über die Vorderkante 11 die Auflaufkante 8 in Verbindung mit dem Anschlagstück 10 nach unten gedrückt und zwar in eine Ausnehmung 13 des Bodenbereiches 4 der Aufnahmevorrichtung, womit dann die Magnetbandkassette 2 vollständig bis zum Anschlag 5 in die Aufnahmevorrichtung eingeschoben werden kann.

Selbstverständlich sind neben der dargestellten Ausführungsform noch andere Ausführungsformen der Sicherungsvorrichtung denkbar. So kann z. B. die Auflaufkante in Verbindung mit dem Anschlagstück auf einer senkrecht zur Einschubrichtung verlaufenden Feder angeordnet sein. Oder aber die gesamte Vorrichtung befindet sich nicht am Boden der Aufnahmevorrichtung, sondern an dem hinteren Seitenteil.

**Patentansprüche**

1. Sicherungsvorrichtung für Bandkassetten oder dergleichen zum lagerichtigen Einschieben der Bandkassette (2) in eine Aufnahmevorrichtung (3), die eine in deren Einschubbereich hineinragende, bei lagerichtigem Einschieben der Bandkassette ausschwenkende Rasteinrichtung (6 bis 10) aufweist, *dadurch gekennzeichnet*, daß als Rasteinrichtung im Einschubbereich der Aufnahmevorrichtung (3) im Abstand zu einem hinteren Anschlagbereich (5) eine durch eine Vorderkante (11) der Bandkassette entgegen der Kraft einer Feder aus dem Einschubbereich verdrängbare, schräge Auflaufkante (8, 9) angeordnet ist, neben der sich ein diese hintergreifendes und mit ihr formschlüssig verbundenes Anschlagstück (10) befindet, das bei seitenverkehrtem Einschieben der Bandkassette an deren Vorderkante anschlägt und ein weiteres Einschieben blockiert und daß die Bandkassette (2) an ihrer Vorderkante (11) eine Ausnehmung (12) aufweist, die dem Anschlagstück (10) gegenüberliegend derart angeordnet ist, daß bei lagerichtigem Einschieben der Bandkassette (2) in die Aufnahmevorrichtung (3) das Anschlagstück zunächst in die Ausnehmung (12) gleitet, so daß dabei mit fortschreitendem Einschieben der Kassette (2) deren Vorderkante (11) die Auflaufkante (9) und damit auch das Anschlagstück (10) aus dem Einschubbereich verdrängt.

2. Sicherungsvorrichtung nach Anspruch 1, *dadurch gekennzeichnet*, daß die Auflaufkante (8, 9) und das Anschlagstück (10) auf dem freien Ende eines in der Aufnahmevorrichtung befestigten zungenförmigen Federelementes (6) angeordnet sind.

3. Sicherungsvorrichtung nach einem der Ansprüche 1 oder 2, *dadurch gekennzeichnet*, daß das zungenförmige Federelement (6) mit der Auflaufkante (9) und dem Anschlagstück (10) einstückig aus einem Stanzteil hergestellt ist.

**Claims**

1. Safety device for tape cassettes or the like for the insertion of the tape cassette (2) in the correct position in a receiving device (3), which has an arresting device (6 to 10) which projects into the insertion zone of said receiving device and swings away when the tape cassette is inserted in the correct position, *characterized in that* there is arranged as arresting device in the insertion zone of the receiving device (3) at a distance from a rear stop zone (5) a bevelled run-on edge (8, 9), which can be displaced from the insertion zone by a front edge (11) of the tape cassette against the force of a spring, and next to which there is located a catch (10) which grips it from behind and is joined to it in a form fit, and, when the tape cassette is inserted reversed, catches against its front edge and blocks further insertion, and in that the tape cassette (2) has at its front edge (11) a recess (12) which is arranged opposite the catch (10) in such a way that, when the tape cassette (2) is inserted in the correct position in the receiving device (3), the catch firstly slides into the recess (12), so that during continued insertion of the cassette (2) its front edge (11) thereby displaces the run-on edge (9) and consequently also the catch (10) from the insertion zone.

2. Safety device according to claim 1, *characterized in that* the run-on edge (8, 9) and the catch (10) are arranged on the free end of a tongue-shaped spring element (6) fixed in the receiving device.

3. Safety device according to one of claims 1 or 2, *characterized in that* the tongue-shaped spring element (6) is produced in one piece with the run-on edge (9) and the catch (10) from a stamping part.

**Revendications**

1. Dispositif de sécurité pour cassettes à bande ou analogues pour l'introduction, en position correcte, de la cassette à bande (2) dans un dispositif récepteur (3), qui possède un dispositif d'encliquetage (6 à 10) pénètrant dans la zone d'introduction du dispositif récepteur et est écarté par pivotement lors de l'introduction, en position correcte, de la cassette à bande, *caractérisé par le* fait qu'il est prévu comme dispositif d'encliquetage, dans la zone d'introduction du dispositif récepteur (3) et à distance d'une zone arrière de butée (5), un bord incliné de compression (8, 9), qui peut être repoussé par un bord avant (11) de la cassette à bande à l'encontre de la force d'un ressort, hors de la zone d'introduction et à côté duquel se trouve disposé un élément de butée (10), qui s'étend en arrière de ce bord, y est relié selon une liaison par formes complémentaires, s'applique contre le bord avant de la cassette à bande, lors de l'introduction à côtés renversés de cette dernière et empêche la poursuite de l'introduction, et que la cassette à bande (2) comporte, sur son bord avant (11), un évidement (12) disposé en vis-à-vis de l'élément de butée (10) de telle sorte que, lors de l'introduction de la cassette à bande (2), en une position correcte, à l'intérieur du dispositif récepteur (3), l'élément de butée pénètre tout d'abord en glissant dans l'évidement (12) de sorte que, lors de la poursuite de l'introduction de la cassette (2), le bord avant (11) de cette dernière repousse le bord incliné (9) et par conséquent, également, l'élément de butée (10) hors de la zone d'introduction.

2. Dispositif de sécurité suivant la revendication 1, *caractérisé par le* fait que le bord incliné (8, 9) et l'élément de butée (10) sont situés sur l'extrémité libre d'un élément de ressort (6) en forme de languette, fixé dans le dispositif récepteur.

3. Dispositif de sécurité suivant l'une des revendications 1 ou 2, *caractérisé par le* fait que l'élément de ressort en forme de languette (6) muni du bord incliné (9) et de l'élément de butée (10) est fabriqué d'un seul tenant à partir d'une pièce découpée.

FIG 1

FIG 2

## FIG 3

## FIG 4

## FIG 5